# EUROPÄISCHE PATENTANMELDUNG

(11) **EP 0 942 019 A2**
(43) Veröffentlichungstag der Anmeldung: **15.09.1999**
(21) Anmeldenummer: 99103891.0
(22) Anmeldetag: 01.03.1999
(51) Int. Cl.: C08F 246/00, C08F 220/36, C09K 19/38

(54) **Nichtlinear-optisch aktive Copolymere, daraus erzeugte Polyaddukte und deren Verwendung für nichtlinear-optische Medien**

(30) Priorität: 09.03.1998 DE 19810065
(71) Anmelder: SIEMENS AKTIENGESELLSCHAFT, 80333 München (DE)
(72) Erfinder: Kanitz, Andreas Dr., 91333 Höchstadt (DE); Hartmann, Horst Prof. Dr., 06217 Merseburg (DE); Fricke, Christian Dr., 14050 Berlin (DE); Kuhne, Karsten Dr., 52372 Kreuzau (DE)

(57) **Zusammenfassung**

Die vorliegende Erfindung betrifft nichtlinear-optisch aktive Copolymere, die sich aus einem Chromophor-acrylat, einem Glycidylgruppen enthaltenden Acrylat und einem weiteren Acrylatbaustein zusammensetzen, sowie daraus durch Vernetzung mit einem Carboxylgruppen enthaltenden Polyester erzeugte Polyaddukte. Die nichtlinear-optischen Copolymeren der vorliegenden Erfindung sowie die daraus hergestellten Polyaddukte sind aufgrund ihrer Orientierungsstabilität im vernetzten Zustand sowie aufgrund ihrer thermischen Stabilität zur Herstellung elektrooptischer und photonischer Bauelemente in hohem Maße geeignet.

## Beschreibung

Die Erfindung betrifft nichtlinear-optisch aktive Copolymere, daraus erzeugte Polyaddukte und deren Verwendung für nicht-linear-optische Medien, d.h. in elektrooptischen und photonischen Bauelementen.

Elektrooptische und photonische Bauelemente sind wesentliche Elemente in der nichtlinearen Optik und in der optischen Informationstechnologie. Sie sind planare Wellenleiterstrukturen, deren Funktion durch eine elektrische Spannung verändert werden kann. Es handelt sich dabei um Modulatoren, Mach-Zehnder-Modulatoren, abstimmbare und schaltbare Richtkoppler, Wellenlängenfilter, durchstimmbare Wellenlängenfilter und polarisationsverändernde Wellenleiterbauelemente. Ihr Aufbau ist beispielsweise von R.C. Alferness in T. Tamir "Guided-Wave Optoelectronics", Springer-Verlag Berlin Heidelberg 1988, Seiten 145 bis 210, und in K.J. Ebeling "Integrierte Optoelektronik", 1. Auflage, Springer-Verlag Berlin Heidelberg 1989, Seiten 152 bis 162, beschrieben.

Solche Bauelemente können unter Verwendung von stark anisotropen anorganischen Kristallen hergestellt werden, die eine hohe Suszeptibilität 2. Ordnung aufweisen.

In den vergangenen Jahren wurden auch organische Materialien und Polymere mit hohen Suszeptibilitäten 2. Ordnung entwickelt. Sie zeichnen sich hinsichtlich ihrer Herstellung und der Verwendung in elektrooptischen und photonischen Bauteilen durch erhebliche Vorteile aus. Polymere mit nichtlinearoptischen Eigenschaften sind aus der Literatur bekannt; siehe dazu beispielsweise: S.R. Marder, J.E. Sohn, G.D. Stucky "Materials for Nonlinear Optics", ACS Symposium Series, Bd. 455 (1991), Seiten 128 bis 156, R.A. Norwood et al. in L.A. Hornak "Polymers for Lightwave and Integrated Optics", Marcel Dekker, Inc., New York 1992, Seiten 287 bis 320, und G.J. Ashwell, D. Bloor "Organic Materials for Nonlinear Optics", Royal Society of Chemistry, Cambridge 1993, Seiten 139 bis 155 und 332 bis 343.

Ein Überblick über die aktuellen Probleme bei der Entwicklung von Materialien mit ausgeprägten nichtlinear-optischen Eigenschaften wurde kürzlich von T.J. Marks und M.A. Ratner in "Angew. Chem." 107 (1995), Seiten 167 bis 187, veröffentlicht. Neben den Erfordernissen, die an die nichtlinearoptischen Chromophore gestellt werden müssen, ist auch auf die Probleme bei der Entwicklung polymerer Matrizen für die Chromophoreinbettung bzw. -einbindung und ihre orientierungsstabile Ausrichtung hingewiesen worden.

Damit derartige Polymere, die mit kovalent gebundenen oder gelösten nichtlinear-optischen Chromophoren versehen sind, nichtlinear-optisch aktiv werden und eine hohe Suszeptibilität 2. Ordnung aufweisen, müssen die Chromophore im elektrischen Feld orientiert werden (siehe dazu: J.D. Swalen et al. in J. Messier, F. Kajzar, P. Prasad "Organic Molecules for Nonlinear Optics and Photonics", Kluwer Academic Publishers 1991, Seiten 433 bis 445). Dies geschieht üblicherweise im Bereich der Glasübergangstemperatur, wo die Beweglichkeit der Kettensegmente der Polymere eine Orientierung der nicht-linear-optischen Chromophore ermöglicht. Die im Feld erzielte Orientierung wird dann durch Abkühlen eingefroren. Die dabei erreichbare Suszeptibilität 2. Ordnung χ⁽²⁾ ist proportional zur räumlichen Dichte der Hyperpolarisierbarkeit β, zum Grundzustandsdipolmoment µ₀ der Chromophore, zum elektrischen Polungsfeld und zu Parametern, welche die Orientierungsverteilung nach dem Polungsprozeß beschreiben (siehe dazu: K.D. Singer et al. in P.N. Prasad, D.R. Ulrich "Nonlinear Optical and Electroactive Polymers", Plenum Press, New York 1988, Seiten 189 bis 204).

Von großem Interesse sind Verbindungen mit hohem Dipolmoment und gleichzeitig hohen β-Werten. Deshalb sind insbesondere Chromophore untersucht worden, die aus konjugierten π-Elektronensystemen bestehen, welche an einem Ende einen Elektronendonor und am anderen Ende einen Elektronenakzeptor tragen und kovalent an ein Polymer gebunden sind, beispielsweise an Polymethylmethacrylat (US-PS 4 915 491), Polyurethan (EP-OS 0 350 112) oder Polysiloxan (US-PS 4 796 976).

Ein besonderes Problem der genannten Polymermaterialien mit nichtlinear-optischen Eigenschaften stellt die Relaxation der orientierten Chromophorbausteine dar und damit der Verlust der nichtlinear-optischen Aktivität. Diese Relaxation verhindert derzeit noch die Herstellung technisch verwertbarer, langzeitstabiler elektrooptischer Bauelemente.

Aufgabe der vorliegenden Erfindung ist es daher, nichtlinearoptisch aktive Copolymere bzw. daraus erzeugte Polyaddukte anzugeben, durch die eine Verhinderung oder zumindest Verlangsamung der Relaxation nach erfolgter Orientierung der nichtlinear-optisch aktiven Bausteine in den NLO-Polymeren erreicht wird. Darüber hinaus sollten die nichtlinear-optisch aktiven Polymere geringe optische Verluste aufweisen. Insbesondere ist es das Ziel der vorliegenden Erfindung, NLO-Polymere bereitzustellen, bei denen eine Relaxation der Chromophore bis zu Temperaturen von oberhalb 100°C verhindert wird und die solche nichtlinear-optische Bausteine enthalten, welche eine thermische Stabilität bei Temperaturen von größer 200°C gewährleisten. Zusätzlich dazu soll durch die NLO-Polymeren eine möglichst breite Variation der optischen Eigenschaften der elektrooptischen und photonischen Bauelemente erreicht werden.

Zur Lösung dieser Aufgabe werden gemäß der vorliegenden Erfindung zunächst nichtlinear-optisch aktive Copolymere der allgemeinen Formel 1 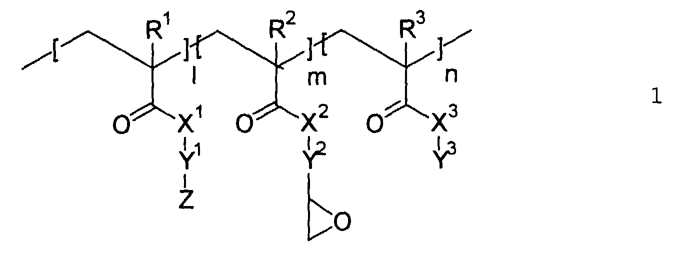 vorgeschlagen, worin R¹, R², R³, X¹, X², X³, Y¹, Y², Y³, Z, l, m und n die nachfolgend angegebene Bedeutung besitzen. Es handelt sich dabei also um nichtlinear-optische, Glycidylgruppen enthaltende Copolymere, welche erfindungsgemäß durch Vernetzung mit einem Carboxylgruppen enthaltenden Polyester mit einem geeigneten Polymerisationsgrad zu den ebenfalls erfindungsgemäßen Polyaddukten der vorliegenden Erfindung umgesetzt werden können.

Die Verwendung von Polyaddukten auf der Basis von Glycidylgruppen enthaltenden nichtlinear-optisch aktiven Copolymeren ist an sich bekannt. In der DE-OS 196 39 381 wird ein Material vorgeschlagen, für das ein Polymer, das eine nicht-linear-optische Gruppe und Glycidyigruppen enthält, zur Erreichung einer stabilen Orientierung der Chromophorbausteine durch Coreaktion mit Cyanaten oder Prepolymeren vernetzt wird. Es zeigte sich jedoch, daß das erhaltene Material nur eine geringe Filmbildungstendenz und thermische Stabilität unter Polungsbedingungen besitzt.

Überraschenderweise konnten diese Nachteile durch die nicht-linear-optisch aktiven Copolymeren der allgemeinen Formel 1 der vorliegenden Erfindung bzw. durch die durch Vernetzung mit einem Carboxylgruppen enthaltenden Polyester daraus erhaltenen Polyaddukte beseitigt werden.

Die nichtlinear-optischen Polyaddukte gemäß der vorliegenden Erfindung werden in der Weise hergestellt, daß ein nichtlinear-optisch aktives Copolymer der allgemeinen Formel 1 mit einem Anteil von 5 bis 95 Mol-% Glycidylgruppen, vorzugsweise 20 bis 80 Mol-%, und mit einem Anteil von 5 bis 95 Mol-%, vorzugsweise 20 bis 80 Mol-%, einfachen linearen oder verzweigten sowie cyclischen Estern, vorzugsweise der Cyclo-hexylreihe, mit mindestens einem Carboxylgruppen enthaltenden Polyester vernetzt wird. Auf ein Grammäquivalent Glycidylgruppen des nichtlinear-optischen Copolymers entfallen vorteilhaft 0,1 bis 5 Grammäquivalent der Polyesterkomponente, bezogen auf die eingesetzte Carboxylgruppenzahl, vorzugsweise 0,4 bis 2,7 Grammäquivalent. Durch die Coreaktion der Glycidylgruppen des nichtlinear-optischen Copolymers und der Polyesterkomponente entstehen im Polymerfilm eng vernetzte Polymerschichten.

Bei der Erzeugung der elektrooptischen oder photonischen Bauelemente erfolgt die vorher erwähnte Orientierung und Vernetzung auf einem Träger, wobei das vernetzte Polyaddukt die Funktionsschicht bildet, welche zwischen zwei Pufferschichten angeordnet ist. Vorteilhaft können auch eine oder beide Pufferschichten der elektrooptischen bzw. photonischen Bauelemente nach der Erfindung aus einem entsprechenden vernetzten NLO-Polymer bestehen wie die Funktionsschicht. Es ist bekannt, daß dabei dann der Brechungsindex der Pufferschichten etwas geringer als derjenige der Funktionsschicht ist. Die Einstellung des erforderlichen Brechungsindexunterschiedes (zur lichtleitenden Funktionsschicht bzw. zu deren Wellenleiterstruktur) erfolgt durch eine geeignete Zusammensetzung der Copolymeren mit und ohne nichtlinear-optische Bausteine.

Die nichtlinear-optisch aktiven, glycidylgruppenhaltigen Copolymere sind vorzugsweise Verbindung der allgemeinen Formel 1:

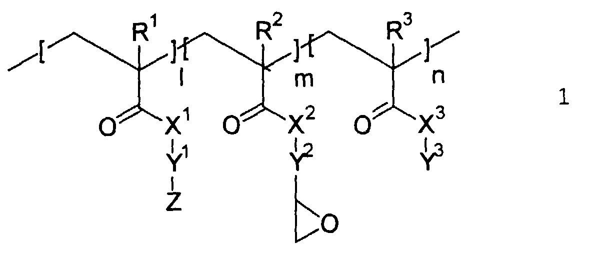

Dabei gilt folgendes:
- R¹, R², R³: bedeuten - gleich oder verschieden voneinander - H, CH₃ oder Halogen;
- X¹, X², X³: bedeuten - gleich oder verschieden voneinander - O oder NR⁴, wobei R⁴ für H oder einen linearen oder verzweigten C₁- bis C₆-Alkylrest steht;
- Y¹: ist eine lineare oder verzweigte Kohlenwasserstoffkette mit 2 bis 20 C-Atomen, wobei eine oder mehrere nicht-benachbarte CH₂-Gruppen, mit Ausnahme der bindenden CH₂-Gruppe zum Rest Z, durch O, S oder NR⁵ ersetzt sein können, wobei R⁵ für H oder einen linearen oder verzweigten C₁- bis C₆-Alkylrest steht;
- Y²: ist eine lineare oder verzweigte Kohlenwasserstoffkette mit 1 bis 3 C-Atomen;
- Y³: ist ein linearer oder verzweigter C₁- bis C₂₀-Alkylrest, ein C₅- bis C₇-Cycloalkylrest oder ein bi- oder tricyclischer Alkylrest mit bis zu 18 C-Atomen;
- Z: ist eine nichtlinear-optisch aktive Gruppe;
- l : m : n =: 1...99 : 1...99 : 1...99.

Vorzugsweise gilt folgendes:
R¹ = R² = R³ = CH₃,
X¹ = X² = X³ = O,
Y¹ = (CH₂)ₒ, mit o = 2 bis 6,
Y² = CH₂,
Y³ = Cyclohexyl, Adamantyl oder Methyl,
l : m : n = 10...50 : 10...30 : 20...80.

Y³ kann beispielsweise auch ein Norbornylrest sein.

Die Reste R⁴ und R⁵ sind insbesondere ein Methyl-, Ethyl-, Propyl-, Isopropyl-, Butyl-, Isobutyl-, sek.-Butyl-, Pentyl-, Isopentyl-, Neopentyl-, Hexyl- oder 2-Methyl-pentylrest.

Die nichtlinear-optisch aktive Gruppe Z kann beispielsweise ein Chromophor vom Typ der Azofarbstoffe, Stilbenfarbstoffe oder Polymethinfarbstoffe sein. Vorzugsweise hat die Gruppe Z eine Struktur der allgemeinen Formel 2: 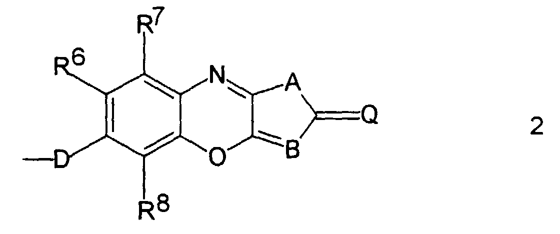 die mit D an Y¹ gebunden ist, und wobei
- D: für O, S oder NR⁹ steht, wobei R⁹ ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, ein Benzylrest oder ein Phenyl- oder Naphthylrest ist oder R⁹ und Y¹ zusammen mit dem sie verbindenden N-Atom einen Pyrrolidinyl-, Piperidinyl-, Morpholinyl- oder Piperazinylrest bilden,
- R⁶, R⁷, R⁸: jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, oder ein Phenyl-, Naphthyl-, Thienyl-, Thiazolyl- oder Pyridylrest sind,
- Q: eine Elektronenakzeptor-substituierte Methylen-oder Iminogruppe ist,
- A: für S, O, NR¹⁰ oder eine Ringdoppelbindung oder für 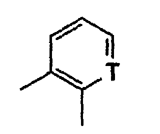 steht, wobei R¹⁰ ein Wasserstoffatom, ein linearer oder verzweigter C₁- bis C₂₀-Alkylrest oder ein Phenyl- oder Naphthylrest ist und T für CH oder N steht oder gegebenenfalls Q und T zusammen eine Struktur vom Typ =N-SO₂-C≡, =N-CS-C≡ oder =N-CO-C≡ bilden, und
- B: eine CH- oder CR¹¹-Gruppe oder N ist, wobei R¹¹ ein linearer oder verzweigter C₁- bis C₂₀-Alkylrest, ein Phenyl- oder ein Naphthylrest ist.

Die Reste R⁶ bis R¹¹ können insbesondere ein Methyl-, Ethyl-, Propyl-, Isopropyl-, Butyl-, Isobutyl-, sek.-Butyl-, Pentyl-, Isopentyl-, Neopentyl-, tert.-Pentyl-, Hexyl-, 2-Methyl-pen-tyl-, Heptyl-, Octyl-, 2-Ethylhexyl-, Isooctyl-, Isononyl-, Decyl- oder Isodecylrest sein sowie die entsprechenden Alkoxy- oder Alkenylreste (die Bezeichnungen Isooctyl, Isononyl und Isodecyl sind dabei Trivialbezeichnungen und stammen von den bei einer Oxosynthese erhaltenen Alkoholen; siehe dazu: 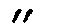 Ullmann's Encyclopedia of Industrial Chemistry", 5^{th} Edition, Vol. A1, Seiten 290 bis 293, und Vol. A10, Seiten 284 und 285).

Besonders bevorzugt bedeuten R⁶, R⁷ und R⁸ jeweils ein Wasserstoffatom, A steht für ein Schwefelatom oder einen 1,2-anellierten Benzolring, B steht für eine CH-Gruppe und Q für eine Dicyanomethylengruppe. Ferner bilden Q und T zusammen bevorzugt eine Struktur =N-SO₂-C≡. Q kann außerdem eine Alkoxycarbonylcyanomethylen-, Cyanimino- oder Alkoxy-carbonyliminogruppe sein. D ist vorzugsweise ein substituierter Aminorest.

Verbindungen der allgemeinen Formel 2 sind in der gleichzeitig eingereichten deutschen Patentanmeldung Akt.Z. 198 10 030.2 ( 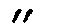 Chromophore Verbindungen und Verfahren zu ihrer Herstellung") ausführlich beschrieben.

Z kann auch ein Azamethin der folgenden Struktur sein:

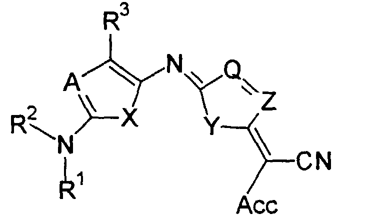

Derartige Verbindungen sind in der gleichzeitig eingereichten deutschen Patentanmeldung 198 10 063.9 ( 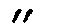 Verfahren zur Herstellung von Azamethinen sowie Azamethine selbst") ausführlich beschrieben.

Die nichtlinear-optisch aktiven Copolymeren sind amorphe Copolymere, die aus Comonomeren aufgebaut sind, welche kovalent gebundene nichtlinear-optische Moleküleinheiten und vernetzungswirksame funktionelle Gruppen aufweisen. Die Herstellung der Copolymeren durch radikalische Polymerisation sowie die Synthese der Vorstufen erfolgt entweder nach an sich bekannten Verfahren und/oder ist in den Ausführungsbeispielen beschrieben.

Die radikalische Polymerisation kann durch thermisch zerfallende radikalische Initiatoren erfolgen. Als derartige Initiatoren dienen vorzugsweise Azoisobuttersäurenitril und Perverbindungen, wie Dibenzoylperoxid.

Als vernetzungswirksame Komponente fungiert in der vorliegenden Erfindung ein Carboxylgruppen enthaltender Polyester der allgemeinen Formel 3:

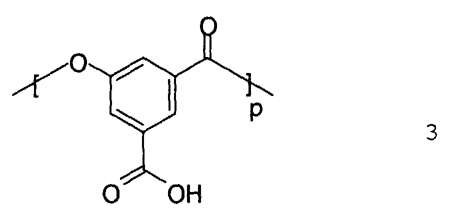

Dabei bedeutet p Werte zwischen 10 und 350, vorzugsweise zwischen 100 und 150. Diese Werte stellen im Rahmen der vorliegenden Erfindung geeignete Polymerisationsgrade dar. Die Polyester sind entweder kommerziell verfügbar oder können durch entsprechende Polymerisation eines geeignet substituierten Isophthalsäureesters erzeugt werden.

Zur Verbesserung der Oberflachenbeschaffenheit, der Verarbeitbarkeit und/oder der Verträglichkeit mit Polymeren können den erfindungsgemäßen Polyaddukten - je nach Einsatzzweck - Verarbeitungshilfsmittel zugesetzt werden. Dies sind beispielsweise Thixotropiermittel, Verlaufmittel, Weichmacher, Netzmittel, Gleitmittel und Bindemittel.

Die Polyaddukte nach der Erfindung werden in gelöster oder flüssiger Form, gegebenenfalls zusammen mit vernetzungswirksamen Verbindungen oder Initiatoren, durch Aufschleudern, Tauchen, Bedrucken oder Bestreichen auf ein Substrat aufgebracht. Auf diese Weise erhält man eine nichtlinear-optische Anordnung, wobei die Polyaddukte oder entsprechende Prepolymere - vor oder während der Vernetzung - in elektrischen Feldern polar ausgerichtet werden. Nach dem Abkühlen werden Polymermaterialien mit ausgezeichneten nichtlinearoptischen Eigenschaften und - bedingt durch die Vernetzung - erhöhter Orientierungsstabilität und somit erhöhter Langzeitstabilität, auch bei erhöhten Gebrauchstemperaturen, erhalten.

Zur Erzeugung der nichtlinear-optischen Materialien werden besonders vorteilhaft oligomere Prepolymere der erfindungsgemäßen Addukte verwendet. Die Herstellung dieser Prepolymeren erfolgt in an sich bekannter Weise, wobei die nichtlinear-optisch aktive Glycidylgruppen und einfache lineare, verzweigte oder cyclische Ester enthaltenden Copolymeren mit einem Überschuß der Carboxylgruppen enthaltenden Polyesterverbindung zur Reaktion gebracht werden. Nach dem Aufbringen auf ein Substrat werden die Prepolymeren - oberhalb der Glasübergangstemperatur - polar ausgerichtet und anschließend im angelegten elektrischen Feld zu den nichtlinear-optischen Polyaddukten mit verbessertem Eigenschaftsprofil vernetzt.

Anhand der folgenden Ausführungsbeispiele soll die Erfindung noch näher erläutert werden, wobei die Synthese von nichtlinear-optisch aktiven Verbindungen (Beispiele 1 bis 6) sowie von Glycidylgruppen enthaltenden nichtlinear-optisch aktiven Copolymeren (Beispiel 7), eines Polyestervernetzers (Beispiel 8), und von Polyaddukten (Beispiel 9) sowie deren Vernetzung (Beispiel 10) und elektrooptische Untersuchungen (Beispiel 11) beschrieben wird.

In den Beispielen werden folgende Abkürzungen verwendet:
- Fp. = Fusionspunkt (Schmelzpunkt);
- Kp. = Kochpunkt (Siedepunkt);
- Ausb. = Ausbeute;
- Zers. = Zersetzung.

### Beispiel 1

### Methacrylat von Benzo[a]-5-dicyanomethylen-9-[N-(n-butyl)-N-(2-hydroxyethyl)-amino]-7,12-phenoxazin

a) 0,1 mol m-Aminophenol werden in 150 ml Methanol mit 0,11 mol n-Butylbromid und 0,1 mol NaHCO₃ versetzt und 5 h unter Rückfluß erhitzt. Nach dem Abkühlen wird filtriert und das Lösungsmittel im Vakuum entfernt. Das zurückbleibende Öl wird im Vakuum fraktioniert. Es entsteht 3-(n-Butyl-amino)-phenol in einer Ausbeute von 57 %; Kp. 110°C (6·10⁻⁵ Torr), Fp. 35°C.
b) 0,1 mol 3-(n-Butyl-amino)-phenol werden in 100 ml Methanol mit 0,11 mol 2-Bromethanol und 0,1 mol NaHCO₃ 10 h unter Rückfluß erhitzt. Nach dem Abkühlen wird filtriert, das Lösungsmittel im Vakuum entfernt und der Rückstand fraktioniert. Es entsteht 3-[N-(n-Butyl)-N-(2-hydroxyethyl)-amino]-phenol in einer Ausbeute von 54 %; Kp. 130 - 140°C (5·10⁻⁵ Torr), Fp. 45 - 47°C.
c) 0,05 mol der Verbindung nach b) werden in 50 ml HCl-gesättigtem Propanol gelöst und mit 0,1 mol Isoamylnitrit versetzt. Nach 20 min wird mit 150 ml Diethylether versetzt und das gebildete Produkt abgesaugt. Es entsteht N-(n-Butyl)-N-(2-hydroxyethyl)-N'-hydroxychinon-diiminiumchlorid in einer Ausbeute von 76 %; Fp. 127°C (Zers.).
d) 0,01 mol der Verbindung nach c) werden mit 0,011 mol 1-Naphthyl-malonitril und 0,02 mol Triethylamin in 15 ml Dimethylformamid kurzzeitig zum Sieden erhitzt. Nach dem Abkühlen wird mit Wasser versetzt und das ausfallende Produkt mit Dichlorethan extrahiert. Nach dem Abdestillieren des Lösungsmittels wird der Rückstand mehrmals durch Chromatographie an Kieselgel unter Verwendung von Essigester als Laufmittel gereinigt. Es entsteht 9-[N-(n-Butyl)-N-(2-hydroxyethyl)-amino]-5-dicyanomethylen-benzo[a]phenoxazin, eine Verbindung folgender Struktur: 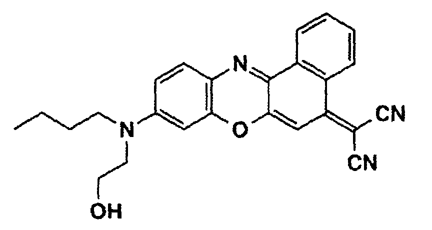 Ausb. 30 %, Fp. 190°C, λₘₐₓ: 618 nm (in Toluol).
e) 0,005 mol des Farbstoffes nach d) werden mit 0,005 mol Methacrylsäurechlorid und 0,005 mol Triethylamin in 100 ml Tetrahydrofuran 1 h auf dem Wasserbad erwärmt. Anschließend wird zur Trockene eingedampft und der Rückstand in Dichlormethan aufgenommen. Nach Entfernen des Lösungsmittels wird der Rückstand an Kieselgel unter Verwendung von Essigester als Laufmittel gereinigt, wobei die Titelverbindung erhalten wird; Fp. 115°C, Ausb. 53 %.

### Beispiel 2

### Methacrylat von Benzo(a]-5-dicyanomethylen-9-[N-(n-heptyl)-N-(2-hydroxyethyl)-amino]-7,12-phenoxazin

a) 0,1 mol m-Aminophenol werden in 150 ml Methanol mit 0,11 mol n-Heptylbromid und 0,1 mol NaHCO₃ versetzt und 5 h unter Rückfluß erhitzt. Nach dem Abkühlen wird filtriert und das Lösungsmittel im Vakuum entfernt. Das zurückbleibende Öl wird im Vakuum fraktioniert. Es entsteht 3-(n-Heptyl-amino)-phenol; Kp. 130 - 140°C (8·10⁻⁵ Torr), Fp. 27 - 30°C, Ausb. 62 %.
b) 0,1 mol 3-(n-Heptyl-amino)-phenol werden in 100 ml Methanol mit 0,11 mol 2-Bromethanol und 0,1 mol NaHCO₃ 10 h unter Rückfluß erhitzt. Nach dem Abkühlen wird filtriert, das Lösungsmittel im Vakuum entfernt und der Rückstand fraktioniert. Es entsteht 3-[N-(n-Heptyl)-N-(2-hydroxy-ethyl)-amino]-phenol; Kp. 160 -170°C (1·10⁻⁵ Torr), Fp. 45 - 47°C, Ausb. 54 %.
c) 0,05 mol der Verbindung nach b) werden in 50 ml HCl-gesättigtem Propanol gelöst und mit 0,1 mol Isoamylnitrit versetzt. Nach 20 min wird mit 150 ml Diethylether versetzt und das gebildete Produkt abgesaugt. Es entsteht N-(n-Heptyl)-N-(2-hydroxyethyl)-N'-hydroxychinon-diiminiumchlorid; Fp. 129°C (Zers.), Ausb. 62 %.
d) 0,01 mol der Verbindung nach c) werden mit 0,011 mol 1-Naphthyl-malonitril und 0,02 mol Triethylamin in 15 ml Dimethylformamid kurzzeitig zum Sieden erhitzt. Nach dem Abkühlen wird mit Wasser versetzt und das ausfallende Produkt mit Dichlorethan extrahiert. Nach dem Abdestillieren des Lösungsmittels wird der Rückstand mehrmals durch Chromatographie an Kieselgel unter Verwendung von Essigester als Laufmittel gereinigt. Es entsteht 9-[N-(n-Heptyl)-N-(2-hydroxyethyl)-amino]-5-dicyanomethylen-benzo[a]phenoxazin, eine Verbindung folgender Struktur: 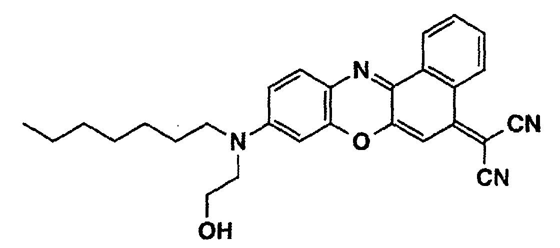 Ausb. 28 %, Fp. 155 - 157°C, λₘₐₓ: 622 nm (in Toluol).
e) 0,005 mol des Farbstoffes nach d) werden - analog Beispiel 1e - mit 0,005 mol Methacrylsäurechlorid und 0,005 mol Triethylamin zum Methacrylat des Farbstoffes umgesetzt, d.h. zur Titelverbindung; Fp. 103 - 105°C, Ausb. 65 %.

### Beispiel 3

### Methacrylat von 2-Dicyanomethylen-6-[N-(n-butyl)-N-(2-hydroxyethyl)-amino[-thieno[3,2-b]benzo[e]oxazin

a) Analog Beispiel 1 erfolgt die Herstellung von 2-Dicyanomethylen-6-[N-(n-butyl)-N-(2-hydroxyethyl)-amino]-thieno[3,2-b]benzo[e]oxazin der Formel 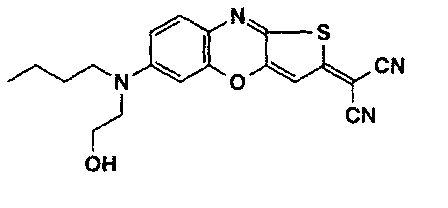 indem 0,01 mol N-(n-Butyl)-N-(2-hydroxyethyl)-N'-hydroxychinon-diiminiumchlorid (siehe Beispiel 1c) mit 0,01 mol 2-Thienyl-malonitril, das durch Reaktion von 0,13 mol Malonitril in 100 ml absolutem Tetrahydrofuran mit 0,15 mol Natriumhydrid, 0,0015 mol [(C₆H₅)₃P]₂PdCl₂ und 25 g 2-Iod-thiophen durch 3-stündiges Kochen unter Rückfluß und anschließende Neutralisation mit Salzsäure in einer Ausbeute von 45 % hergestellt wurde, in 15 ml Dimethylformamid, welchem 0,02 mol Triethylamin zugesetzt wurden, einige Minuten unter Rückfluß erhitzt werden. Die erhaltene Lösung wird - nach dem Abkühlen - mit Wasser verdünnt und der dabei ausgefällte Farbstoff durch Absaugen isoliert. Die Reinigung erfolgt durch mehrmalige Säulenchromatographie an Kieselgel mit Essigester als Laufmittel; Ausb. 23 %, Fp. 260°C.
b) Die Überführung des Farbstoffes in das Methacrylat erfolgt - entsprechend Beispiel 1 - durch Umsetzung mit Methacrylsäurechlorid in Gegenwart von Triethylamin.

### Beispiel 4

### Methacrylat von 9-[N-(n-Heptyl)-N-(2-hydroxyethyl)-amino]-benzo[d]isothiazolo[3,3a,4-ab]-phen-7,12-oxazin-4-dioxid

Analog Beispiel 2 wird aus N-(n-Heptyl)-N-(2-hydroxyethyl)-N'-hydroxychinon-diiminiumchlorid (siehe Beispiel 2c) und 1,8-Naphthosultam ein Phenoxazinfarbstoff folgender Struktur hergestellt (Fp. 178 - 180°C, Ausb. 35 %):

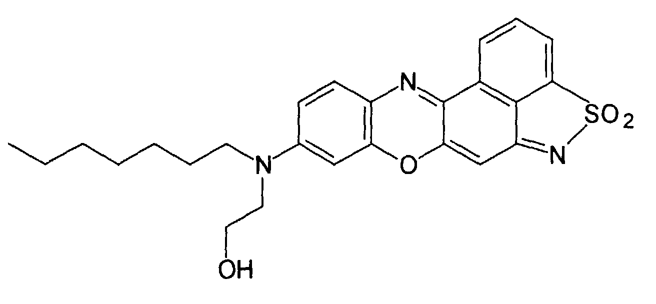

Durch Umsetzung mit Methacrylsäurechlorid in Tetrahydrofuran, dem frisch destilliertes Triethylamin zugesetzt wurde, wird der Farbstoff in den Methacrylsäureester folgender Struktur übergeführt:

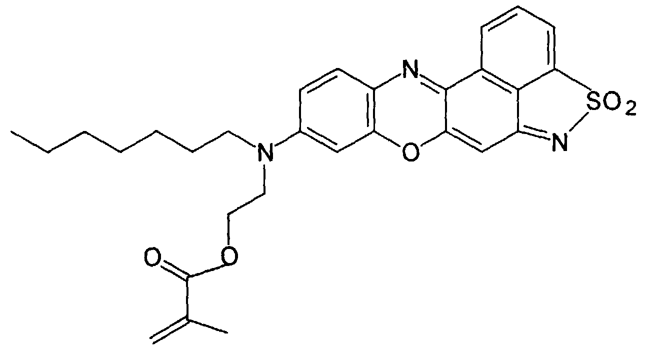

### Beispiel 5

### Benzo[a]-5-cyanimino-9-[N-(n-butyl)-N-(2-hydroxyethyl)-amino]-7,12-phenoxazin

Analog Beispiel 1 wird aus N-(n-Butyl)-N-(2-hydroxyethyl)-N'-hydroxychinon-diiminiumchlorid (siehe Beispiel 1c) und N-Cyano-1-naphthylamin ein Phenoxazinfarbstoff folgender Struktur hergestellt (Fp. 173 - 175°C, Ausb. 25 %):

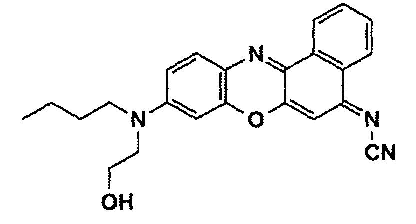

Der Farbstoff wird anschließend durch Umsetzung mit Methacrylsäurechlorid in Tetrahydrofuran, dem frisch destilliertes Triethylamin zugesetzt wurde, in den Methacrylsäureester folgender Struktur übergeführt:

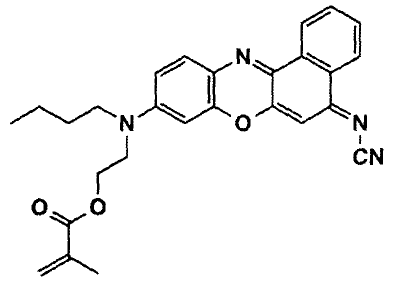

### Beispiel 6

### Pyridino[2,3-a]-5-cyanimino-9-[N-(n-butyl)-N-(2-hydroxyethyl)-amino]-7,12-phenoxazin

Analog Beispiel 1 wird aus N-(n-Butyl)-N-(2-hydroxyethyl)-N'-hydroxychinon-diiminiumchlorid (siehe Beispiel 1c) und 8-Cyanamino-chinolin ein Phenoxazinfarbstoff folgender Struktur hergestellt (Fp. 185 - 187°C, Ausb. 32 %):

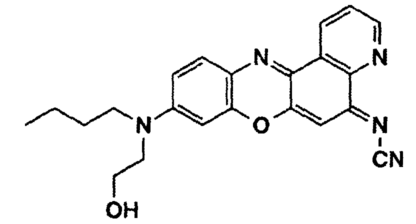

Der Farbstoff wird anschließend durch Umsetzung mit Methacrylsäurechlorid in Tetrahydrofuran, dem frisch destilliertes Triethylamin zugesetzt wurde, in den Methacrylsäureester folgender Struktur übergeführt:

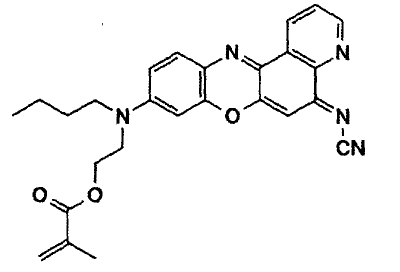

### Beispiel 7

### Synthese von Glycidylgruppen enthaltenden nichtlinear-optisch aktiven Copolymeren

Zur Copolymerisation von nichtlinear-optisch aktiven Chromophor-methacrylaten l, beispielsweise der Oxazin-Substanz-klasse nach Beispiel 2 (P2a bis P2c), mit Methacrylsäureglycidylester m und Cyclohexylmethacrylat n werden die drei Komponenten zusammen mit 2 Mol-% Azoisobuttersäurenitril in sauerstofffreiem absolutem Chlorbenzol (90 Masse-%, bezogen auf die Farbstoffmenge) in einem Schlenkrohr bei 75°C unter Argon zur Reaktion gebracht; die Reaktionsdauer beträgt 18 bis 24 Stunden. Das dabei erhaltene Rohprodukt wird durch Zusatz von Tetrahydrofuran vollständig gelöst und in Methanol gefällt. Zur Reinigung des Copolymers wird mehrmals umgefällt. Die dabei erhaltenen Ergebnisse sind in Tabelle 1 zusammengefaßt (T_{G} = Glasübergangstemperatur).

**Tabelle 1**

| Polymer Nr. | Zusammensetzung l:m:n in Mol-% | Ausbeute in % | T_{G} in °C |
|---|---|---|---|
| P2a | 33:15:52 | 87 | 133 |
| P2b | 25:15:60 | 85 | 127 |
| P2c | 20:15:65 | 92 | 118 |

### Beispiel 8

### Synthese eines Polyester-Vernetzers

Man erhitzt 5-Acetoxy-isophthalsäure in Eisessig zum Rückfluß, bis der gewünschte Polymerisationsgrad erreicht ist; danach fällt man den entstandenen Polyester durch Eintropfen in Wasser aus. Die Molmassenverteilung wird durch Gelpermeationschromatographie bestimmt.

### Beispiel 9

### Synthese von Polyaddukten

2 Masseteile des Polyester-Prepolymers nach Beispiel 8 und 98 Masseteile eines Glycidylgruppen enthaltenden nichtlinear-optischen Copolymers nach Beispiel 7 werden bei 20°C homogen in Cyclohexanon gelöst; dabei erfolgt eine leichte Vorvernetzung.

### Beispiel 10

### Vernetzung der Polyaddukte

Zur Vernetzung werden die Addukte aus dem Polyesterharz und dem Glycidylgruppen enthaltenden nichtlinear-optisch aktiven Copolymer nach Beipiel 9 auf geeignete Trägermaterialen, wie Glas, ITO-beschichtetes Glas (ITO = Indium-Zinn-Oxid) oder Siliziumwafer, durch Spin-coating aus einer Lösung, vorzugsweise in Cyclohexanon, aufgebracht und bei erhöhter Temperatur, vorzugsweise 15 Stunden bei 70°C, im Vakuum vom Lösungsmittel befreit. Anschließend wird das Substrat mit einer Deckelektrode versehen und im elektrischen DC-Feld langsam auf die Glasübergangstemperatur des jeweiligen Materials erwärmt; dabei wird das Schichtmaterial dipolar ausgerichtet und gleichzeitig vernetzt. Die Reaktionsbedingungen und die dabei erhaltenen Ergebnisse sind in Tabelle 2 zusammengefaßt (T_{G} = Glasübergangstemperatur).

**Tabelle 2**

| Polyaddukt aus Prepolymer | Temperaturverlauf bei der Härtung | T_{G} nach Härtung in °C |
|---|---|---|
| P1a *) | 125°C, 1h | 145 |
| P2a | 135°C, 1h | 152 |

| | | |
|---|---|---|
| *) P1a = Chromophor-methacrylat nach Beispiel 1 mit einer Zusammensetzung entsprechend Prepolymer P2a. | | |

### Beispiel 11

### Elektrooptische Untersuchungen

Für die elektrooptischen Untersuchungen werden aus den erfindungsgemäßen Polyaddukten Filme mit üblicherweise 2 bis 6 µm Schichtdicke hergestellt. Für das elektrische Polen, zur Erzielung einer hohen nicht-zentrosymmetrischen Orientierung, wird auf den Film (aus dem Polyaddukt) eine Goldelektrode aufgesputtert; die Gegenelektrode ist eine lichtdurchlässige ITO-Schicht. Beim Erwärmen der Probe bis in den Glasübergangstemperaturbereich wird eine Gleichspannung angelegt, wobei die erforderliche Spannungserhöhung auf das Orientierungsverhalten der nichtlinear-optischen Moleküleinheiten abgestimmt wird, um elektrische Durchschläge und somit eine Zerstörung des Films zu vermeiden. Nach Erreichen einer Polungsfeldstärke von 100 bis 200 V/µm genügt eine Polungsdauer von ca. 30 min zur Orientierung der nichtlinear-optischen Moleküleinheiten. Danach wird die Probe - mit konstant anliegendem Feld - bis auf Raumtemperatur abgekühlt, wodurch die Orientierung fixiert wird.

Die elektrooptischen Untersuchungen der Polymerproben erfolgen durch interferometrische Messung eines schräg eingestrahlten Laserstrahls nach Einfachreflexion an der Goldelektrode. Der dazu erforderliche Meßaufbau und die Meßauswertung sind bekannt (siehe beispielsweise: "Appl. Phys. Lett.", Vol. 56 (1990), Seiten 1734 bis 1736).

Mit den nichtlinear-optisch aktiven Copolymeren bzw. den durch Vorvernetzung mit einem Carboxylgruppen enthaltenden Polyester erhaltenen Polyaddukten nach der Erfindung lassen sich in bekannter Weise elektrooptische und photonische Bauelemente herstellen, wobei die Polyaddukte, wie bereits erwähnt, als Funktionsschichten und/oder Pufferschichten eingesetzt werden können.

## Patentansprüche

1. Nichtlinear-optisch aktive Copolymere der allgemeinen Formel 1 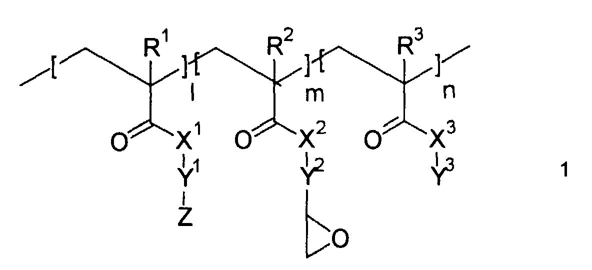 wobei folgendes gilt:
R¹, R², R³ bedeuten - gleich oder verschieden voneinander - H, CH₃ oder Halogen;
X¹, X², X³ bedeuten - gleich oder verschieden voneinander - O oder NR⁴, wobei R⁴ für H oder einen linearen oder verzweigten C₁- bis C₆-Alkylrest steht;
Y¹ ist eine lineare oder verzweigte Kohlenwasserstoffkette mit 2 bis 20 C-Atomen, wobei eine oder mehrere nicht-benachbarte CH₂-Gruppen, mit Ausnahme der bindenden CH₂-Gruppe zum Rest Z, durch O, S oder NR⁵ ersetzt sein können, wobei R⁵ für H oder einen linearen oder verzweigten C₁- bis C₆-Alkylrest steht;
Y² ist eine lineare oder verzweigte Kohlenwasserstoffkette mit 1 bis 3 C-Atomen;
Y³ ist ein linearer oder verzweigter C₁ bis C₂₀-Alkylrest, ein C₅- bis C₇-Cycloalkylrest oder ein bi- oder tricyclischer Alkylrest mit bis zu 18 C-Atomen;
Z ist eine nichtlinear-optisch aktive Gruppe;
l : m : n = 1...99 : 1...99 : 1...99.

2. Copolymere nach Anspruch 1, **dadurch gekennzeichnet,** daß Z eine nichtlinear-optisch aktive Gruppe der allgemeinen Formel 2 ist: 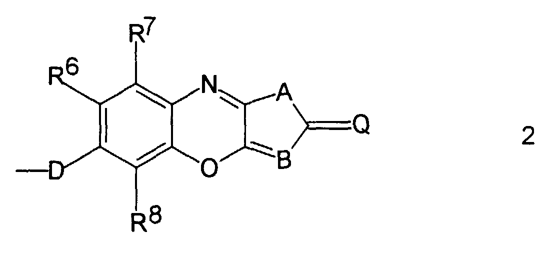 die mit D an Y¹ gebunden ist, und wobei
D für O, S oder NR⁹ steht, wobei R⁹ ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, ein Benzylrest oder ein Phenyl- oder Naphthylrest ist oder R⁹ und Y¹ zusammen mit dem sie verbindenden N-Atom einen Pyrrolidinyl-, Piperidinyl-, Morpholinyl- oder Piperazinylrest bilden,
R⁶, R⁷, R⁸ jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, oder ein Phenyl-, Naphthyl-, Thienyl-, Thiazolyl- oder Pyridylrest sind,
Q eine Elektronenakzeptor-substituierte Methylenoder Iminogruppe ist,
A für S, O, NR¹⁰ oder eine Ringdoppelbindung oder für 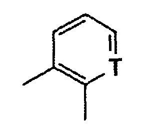 steht, wobei R¹⁰ ein Wasserstoffatom, ein linearer oder verzweigter C₁- bis C₂₀-Alkylrest oder ein Phenyl- oder Naphthylrest ist und T für CH oder N steht oder gegebenenfalls Q und T zusammen eine Struktur vom Typ =N-SO₂-C≡, =N-CS-C≡ oder =N-CO-C≡ bilden, und
B eine CH- oder CR¹¹-Gruppe oder N ist, wobei R¹¹ ein linearer oder verzweigter C₁- bis C₂₀-Alkylrest, ein Phenyl- oder ein Naphthylrest ist.

3. Copolymere nach Anspruch 1 oder 2, **dadurch gekennzeichnet,** daß R¹, R² und R³ jeweils CH₃ bedeuten.

4. Copolymere nach einem der Ansprüche 1 bis 3, **dadurch gekennzeichnet,** daß X¹, X² und X³ jeweils für O stehen.

5. Copolymere nach einem der Ansprüche 1 bis 4, **dadurch gekennzeichnet,** daß Y¹ eine C₂- bis C₆-Kohlenwasserstoffkette ist.

6. Copolymere nach einem der Ansprüche 1 bis 5, **dadurch gekennzeichnet,** daß Y³ - vorzugsweise in dieser Reihenfolge - ein Rest aus der Gruppe Cyclohexyl, Adamantyl und Methyl ist.

7. Copolymere nach einem der Ansprüche 1 bis 6, **dadurch gekennzeichnet,** daß R⁶, R⁷ und R⁸ jeweils H bedeuten.

8. Copolymere nach einem der Ansprüche 1 bis 7, **dadurch gekennzeichnet,** daß A für S oder einen 1,2-anellierten Benzolring steht.

9. Copolymere nach einem der Ansprüche 1 bis 8, **dadurch gekennzeichnet,** daß B eine CH-Gruppe ist.

10. Copolymere nach einem der Ansprüche 1 bis 9, **dadurch gekennzeichnet,** daß Q eine Dicyanomethylengruppe ist oder zusammen mit T eine Struktur =N-SO₂-C≡ bildet.

11. Copolymere nach einem der Ansprüche 1 bis 10, **dadurch gekennzeichnet,** daß Q für eine Alkoxycarbonylcyanomethylen-, Cyanimino- oder Alkoxycarbonyliminogruppe steht.

12. Copolymere nach einem der Ansprüche 1 bis 11, **dadurch gekennzeichnet,** daß das Verhältnis l : m : n = 10...50 : 10...30 : 20...80 beträgt.

13. Polyaddukt, das aus einem nichtlinear-optisch aktiven Copolymer nach einem der Ansprüche 1 bis 12 und wenigstens einem Vernetzungsmittel auf Basis eines Carboxylgruppen enthaltenden Polyesters gebildet ist.

14. Polyaddukt nach Anspruch 13, **dadurch gekennzeichnet,** daß der Polyester ein 5-Hydroxy-isophthalsäureester der allgemeinen Formel 3 ist: 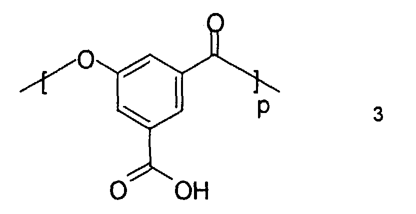 worin p ein Wert zwischen 10 und 350 ist.

15. Polyaddukt nach Anspruch 14, **dadurch gekennzeichnet,** daß p ein Wert zwischen 100 und 150 ist.

16. Verwendung des Polyadduktes nach einem der Ansprüche 13 bis 15 für nichtlinear-optische Medien.
